# EUROPÄISCHE PATENTANMELDUNG

(11) **EP 1 705 042 A2**
(43) Veröffentlichungstag der Anmeldung: **27.09.2006**
(21) Anmeldenummer: 06110955.9
(22) Anmeldetag: 10.03.2006
(51) Int. Cl.: B60J 1/20

(54) **Beschattungssystem**

(30) Priorität: 23.03.2005 DE 102005014059
(71) Anmelder: Christ, Alexander, 50679 Köln (DE); Endert, Guido, 42799 Leichlingen (DE); Wergen, Horst, 42105 Wuppertal (DE)
(72) Erfinder: Christ, Alexander, 50679 Köln (DE); Endert, Guido, 42799 Leichlingen (DE); Wergen, Horst, 42105 Wuppertal (DE)
(74) Vertreter: Vogel, Andreas

(57) **Zusammenfassung**

Die Erfindung betrifft ein Beschattungssystem (1) für eine Fahrerkabine (2) eines Kraftfahrzeugs, insbesondere eines Wohnmobils oder dergleichen, die mindestens eine Frontscheibe (3) und mehrere Seitenscheiben (4,5) aufweist, mit einem Abdeckmittel (6',6",6"'), das durch eine Abwärtsbewegung in eine Beschattungsposition, in der das Abdeckmittel (6',6",6"') die Frontscheibe (3) und die Seitenscheiben (4,5) abdeckt, und durch eine Aufwärtsbewegung in eine Ruheposition bringbar ist.

Erfindungsgemäß ist vorgesehen, dass das Abdeckmittel (6',6",6"') mit einer antreibbaren, im Wesentlichen einen u-förmigen Verlauf aufweisenden und derart ausgebildeten Welleneinheit (7) verbunden ist, dass bei Betätigung der Welleneinheit (7) die Aufwärts- und/oder Abwärtsbewegung des Abdeckmittels (6',6",6"') gleichzeitig an allen Scheiben (3,4,5) bewirkbar ist.

## Beschreibung

Die Erfindung betrifft ein Beschattungssystem für eine Fahrerkabine eines Kraftfahrzeugs, insbesondere eines Wohnmobils oder dergleichen, die mindestens eine Frontscheibe und mehrere Seitenscheiben aufweist, mit einem Abdeckmittel, das durch eine Abwärtsbewebung in eine Beschattungsposition, in der das Abdeckmittel die Frontscheibe und die Seitenscheiben abdeckt, und durch eine Aufwärtsbewegung in eine Ruheposition bringbar ist.

In der DE 101 11 239 B4 ist eine Vorrichtung zum Verstauen eines Vorhanges offenbart, welcher zum Verdunkeln eines Fahrzeuginnenraums in einer im wesentlich horizontal verlaufenden Führungsschiene entlang wenigstens einer der Fahrzeuginnenwände geführt ist und im gerafften Zustand in einem Staufach ablegbar ist.

Einer der Nachteile dieser Vorrichtung ist, dass eine 100%ige Blickdichtheit, insbesondere an den Rändern der Vorhänge, nicht erzielt werden kann. Des Weiteren sind in der Regel für jedes Fenster der Fahrerkabine ein Vorhang notwendig, der während des Beschattungsvorganges vor das jeweilige Fenster gezogen werden muss.

Ferner ist dem Fachmann bekannt, bei Wohnwagen, Wohnmobilen oder dergleichen, innenseitig an Fenstern Rolloeinrichtungen anzuordnen. Derartige Einrichtungen können beispielsweise durch eine in einem Kasten gelagerte Welle realisiert sein, die bei einem Seitenfenster oberhalb der Fensteröffnung angeordnet ist. Das Rollo kann beispielsweise gegen die Kraft einer Feder von der Welle durch Herabziehen zum Bedecken der Fensteröffnung abwickelbar sein. In der DE 299 16 738 U1 ist beispielsweise eine Rolloeinrichtung für Wohnwagen, Wohnmobile oder dergleichen beschrieben, bestehend aus zwei parallel und mit Abstand zueinander angeordneten, eine Fensteröffnung einschließenden Achsen und einem Rollo, dessen in Bewegungsrichtung des Rollos liegende Enden jeweils an einer Achse befestigt sind. Nachteiligerweise ist für jede Fensteröffnung jeweils ein Rollo sowie eine dazugehörige Welle notwendig, um eine zufriedenstellende Beschattung des Innenraumes zu erreichen. Ein weiterer Nachteil ist, dass jedes Rollo einzeln in seine Beschattungsposition gebracht werden muss, welches insbesondere bei manueller Betätigung einen erheblichen Zeitaufwand nach sich zieht. Neben einer Vielzahl an Einzelrollos sind darüber hinaus eine gleiche Anzahl an Wellen notwendig, die jeweils mit einem Rollo verbunden sind, welches mit einer hohen Anzahl an Bauteilen verbunden ist.

Es ist Aufgabe der vorliegenden Erfindung, ein Beschattungssystem für eine Fahrerkabine eines Kraftfahrzeuges zu schaffen, bei dem die genannten Nachteile vermieden werden, insbesondere ein Beschattungssystem bereit gestellt wird, das einfach gestaltet ist, ohne erheblichen Aufwand montiert werden kann, gute Funktionalitätseigenschaften aufweist und eine nahezu 100%ige Blickdichtheit im Beschattungszustand erreicht.

Zur Lösung dieser Aufgabe wird ein Beschattungssystem mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Abdeckmittel mit einer antreibbaren, im Wesentlichen einen U-förmigen Verlauf aufweisenden und derart ausgebildeten, Welleneinheit verbunden ist, dass bei Betätigung der Welleneinheit die Aufwärts- und/oder Abwärtsbewegung des Abdeckmittels gleichzeitig an allen Scheiben bewirkbar ist. Der besondere Vorteil dieser Erfindung ist, dass lediglich eine Welleneinheit für die Beschattung der Fahrerkabine notwendig ist, wodurch die Bauteilzahl, verglichen zum Stand der Technik, erheblich reduziert werden kann. Ein weiterer Vorteil ist, dass durch Aktivierung bzw. Betätigung der Welleneinheit eine Aufwärts- und/oder Abwärtsbewegung des Abdeckmittels gleichzeitig an der Frontscheibe sowie an den Seitenscheiben erzielbar ist. Die Welleneinheit befindet sich vorzugsweise hinter der Innenverkleidung der Fahrerkabine, so dass die Welleneinheit nicht sichtbar innerhalb des Kraftfahrzeuges positioniert ist. In einer möglichen Ausführungsalternative kann die Fahrerkabine ein Staufach aufweisen, in dem das Beschattungssystem in Ruheposition nicht sichtbar angeordnet ist, wobei das Staufach durch eine verschließbare Klappe in Schließstellung sich befindet. Diese Klappe dient in diesem Ausführungsbeispiel als Sicherheitsmechanismus, der bewirkt, dass beispielsweise während der Fahrt das Beschattungssystem bzw. das Abdeckmittel entlang der Frontscheibe sich nicht abwärts bewegt und etwaig dem Fahrer die Sicht bedeckt.

In einer möglichen Ausführungsform der Erfindung kann die Welleneinheit mehrere Wellenabschnitte aufweisen, die jeweils durch Verbindungselemente miteinander verbunden sind. Das Verbindungselement kann beispielsweise ein Gelenk, insbesondere ein Kardangelenk sein, welches bewirkt, dass die Antriebskraft auf alle Wellenabschnitte übertragen wird. Die Welleneinheit kann beispielsweise durch einen Elektromotor oder durch ein manuell betätigbares Antriebselement, beispielsweise eine Handkurbel oder ein Seilzug, angetrieben werden. Während des Antriebes wird die Welleneinheit mit jeden Wellenabschnitten in eine gewünschte Drehzahl gebracht. Das mit der Welleneinheit verbundene Abdeckmittel erfährt somit eine Aufwärts- und/oder Abwärtsbewegung entlang der Scheiben innerhalb der Fahrerkabine.

In einer weiteren Alternative der Erfindung kann das Verbindungselement als Kegelrad oder als Schlauchkupplung ausgeführt sein. Der besondere Vorteil einer Welleneinheit mit mehreren Wellenabschnitten ist, dass die im Wesentlichen U-förmige Kontur der Fahrerkabine durch die erfindungsgemäße Welleneinheit nachgebildet ist. Die Welleneinheit befindet sich oberhalb der Scheiben der Fahrerkabine, wobei vorzugsweise jeder Wellenabschnitt einer Scheibe zugeordnet ist. In einer bevorzugten Ausführungsform dienen die Verbindungselemente dafür, zum einen, einen U-förmigen Verlauf der Welleneinheit zu erzielen und zum anderen das Drehmoment auf dem benachbarten Wellenabschnitt zuverlässig zu übertragen. Im eingesetzten Zustand der Welleneinheit innerhalb der Fahrerkabine befinden sich die Verbindungselemente im Bereich zwischen der Frontscheibe und der anliegenden Seitenscheibe bzw. zwischen zwei Seitenscheiben, falls mehrere, in einem Winkel zueinander stehende Seitenscheiben vorhanden sind.

In einer weiteren Ausgestaltungsmöglichkeit des Beschattungssystems können die Welleneinheit bzw. die einzelnen Wellenabschnitte aus einem flexiblen Material bestehen, wodurch die Welleneinheit ebenfalls in eine U-förmige Erstreckung bringbar ist. Eine derartige Welleneinheit kann selbstverständlich zusätzlich mit den genannten Verbindungselementen ausgestaltet sein. Der besondere Vorteil dieser flexiblen Welle ist, dass diese entsprechend der geneigten und/oder gewölbten Scheiben folgen kann. Das an der Welleneinheit befestigte Abdeckmittel erstreckt sich damit im Wesentlichen entlang der Wölbung der Scheiben, so dass eine zuverlässige Verdunklung des Fahrzeuginnenraumes erzielt werden kann.

Zweckmäßigerweise weist das Beschattungssystem eine Arretiervorrichtung auf, die das Abdeckmittel in der jeweiligen Position zuverlässig hält. Als Arretiervorrichtung ist beispielsweise eine Rutschkupplung denkbar. Selbstverständlich sind zwischen der Ruheposition und der Beschattungsposition eine Vielzahl an Teilbeschattungspositionen möglich.

Vorzugsweise ist das Abdeckmittel zumindest an einer Seite mit einem metallischen Material, insbesondere Aluminium, beschichtet, welches wärmereflektierend wirkt.

Eine weitere vorteilhafte Ausgestaltung der Erfindung sieht vor, dass das Abdeckmittel Gewichte aufweist, die vorzugsweise an der der Welleneinheit abgewandten Seite des Abdeckmittels angeordnet sind. Als Gewichte können beispielsweise Bleifäden verwendet werden, die im Abdeckmittel z.B. eingenäht sind, wodurch das Abdeckmittel während der Aufwärts- und/oder Abwärtsbewegung stets straff nach unten hängend gehalten wird. Als Gewicht kann ebenfalls eine Schiene zum Einsatz kommen, die am freien Ende des Abdeckmittels befestigt ist. Die Welleneinheit und die Schiene können durch einen oder mehrere Fäden miteinander verbunden sein, wodurch sich bei Aktivierung der Welleneinheit der Faden an dem jeweiligen Wellenabschnitt auf- oder abwickelt.

Eine weitere vorteilhafte Ausgestaltung sieht vor, dass das Abdeckmittel mehrere Abdeckflächen aufweist, die der jeweiligen zu beschattenden Scheibe zugeordnet sind, wobei die benachbarten Abdeckflächen in einem Winkel zueinander stehen können. Hierbei schirmt jede Abdeckfläche das zugehörige Fenster in Beschattungsposition ab. Die Abdeckflächen können vorzugsweise formschlüssig und/oder kraftschlüssig und/oder stoffschlüssig miteinander verbunden sein. Selbstverständlich kann eine Abdeckfläche auch mehrere Fenster gleichzeitig abdecken. In einer besonderen Ausführungsform der Erfindung ist die jeweilige Abdeckfläche als Rollo ausgebildet. Die Rollos können an ihren Randbereichen sich berühren, aufeinander liegen oder beispielsweise durch einen Klettverschluss miteinander verbunden sein.

Bei einer bevorzugten Ausführungsform ist das Abdeckmittel zur Beschattung aller Scheiben einstückig ausgebildet. In einer möglichen Alternative ist das Abdeckmittel als lammellenartiger Vorhang ausgestaltet. Hierbei weist der Vorhang mehrere horizontale Falzlinien und mehrere im zick-zack verlaufende Falzlinien auf, die vertikal zu den horizontalen Falzlinien sich erstrecken. Die im zick-zack verlaufenden Falzlinien begrenzen die einzelnen Abdeckflächen voneinander. In anderen Worten ist der Vorhang ziehharmonikaartig ausgeführt, der in Ruheposition eine flache, zusammengefaltete Einheit bildet, wobei die einzelnen Lammellen des Abdeckmittels aufeinander liegen. Die zick-zack verlaufenden Falzlinien bewirken, dass der lammellenartige Vorhang einen U-förmigen Verlauf erfährt. Vorzugsweise sind die im zick-zack verlaufenden Falzlinien im Bereich zwischen der Frontscheibe und der Seitenscheibe bzw. im Bereich zwischen zwei Seitenscheiben angeordnet. Mit den zick-zack verlaufenden Falzlinien wird erreicht, dass die Abdeckflächen in einem bestimmten Winkel, d.h. abgeknickt zueinander, stehen. Wie die Verbindungselemente für die Welleneinheit, sorgen die zick-zack verlaufenden Falzlinien für einen U-förmigen Verlauf, der der Fahrerkabine des Kraftfahrzeuges angepasst ist.

Zweckmäßigerweise weisen die zick-zack verlaufenden Falzlinien unterschiedliche Amplituden auf. Je größer die Amplitude, desto geringer sind die jeweils benachbarten Abdeckflächen zueinander abgewinkelt. Vorzugsweise haben die zick-zack verlaufenden Falzlinien im Bereich zwischen der Frontscheibe und der benachbarten Seitenscheibe eine geringe Amplitude. Die zick-zack verlaufenden Falzlinien im Bereich zwischen zwei benachbarten Seitenscheiben, die gering zueinander abgewinkelt sind, weisen hingegen eine große Amplitude auf. Die horizontal verlaufenden Falzlinien des Vorhangs haben zweckmäßigerweise jeweils einen festen Abstand zueinander.

In einer alternativen Ausführungsform des Beschattungssystems weist das Abdeckmittel eine Vielzahl an übereinanderliegenden, zusammenfaltbaren Hohlkammerprofilen auf. Die Hohlkammerprofile können beispielsweise miteinander verklebt sein. Das Hohlkammerprofil, das im Innenraum mit einer Aluminiumschicht beschichtet sein kann, ist in einer bevorzugten Ausführungsform wabenförmig ausgebildet. Im Gegensatz zum lammellenartigen Vorhang weist das Abdeckmittel mehrere Abdeckflächen auf, die über Befestigungsmittel miteinander verbunden sind. Die Abdeckflächen können beispielsweise über einen vertikal sich erstreckenden Faden oder Stab miteinander verbunden sein. Jede Abdeckfläche besteht aus einer Vielzahl von übereinanderliegenden Hohlkammerprofilen, die in die benachbarte Abdeckfläche in einem bestimmten Winkel (ungleich 180°) eingeführt sind. In diesem Verbindungsbereich zwischen zwei benachbarten Abdeckflächen verläuft zweckmäßigerweise der Faden oder der Stab, der als zusätzliches Befestigungsmittel die benachbarten Abdeckflächen zusammenhält. Gleichzeitig dient der Faden und/oder der Stab als Führungsmittel während der Aufwärts- und/oder Abwärtsbewegung des Abdeckmittels bzw. der Abdeckflächen.

Die Aufgabe wird ebenfalls durch einen Zuschnitt mit den Merkmalen des Anspruchs 24 gelöst.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine dreidimensionale Darstellung einer Fahrerkabine,
- Figur 2: eine stark vereinfachte Darstellung des Beschattungssystems in Ruheposition,
- Figur 3: das Beschattungssystem gemäß Figur 2 in Beschattungsposition,
- Figur 4: eine rein schematische Darstellung der Fahrerkabine mit Frontscheibe und Seitenscheiben in Draufsicht,
- Figur 5: ein Teilbereich eines Abdeckmittels, das als lammellenartiger Vorhang ausgeführt ist,
- Figur 6: eine schematische Darstellung einer Welleneinheit mit Verbindungselementen,
- Figur 7: der lammellenartige Vorhang gemäß Figur 5 im ausgefalteten Zustand,
- Figur 8: eine weitere Ausführungsform des Abdeckmittels, das eine Vielzahl an Hohlkammerprofilen aufweist und
- Figur 9: eine prinzipielle Darstellung des Verbindungsbereiches zwischen zwei als Hohlkammerprofil ausgebildeten Abdeckflächen.

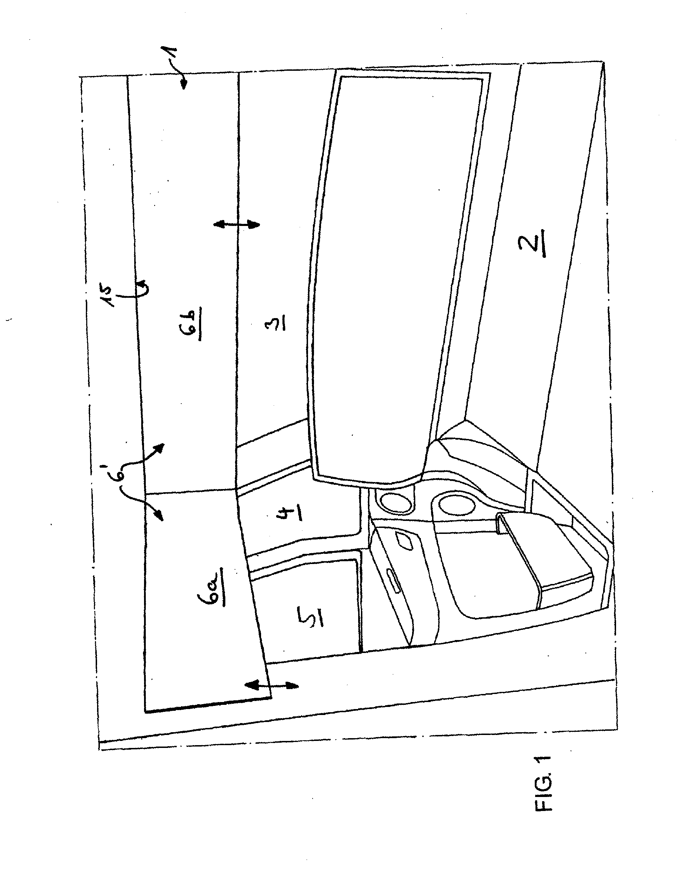

Figur 1 zeigt ein in einer Fahrerkabine 2 eines Kraftfahrzeuges integriertes Beschattungssystem 1. Wie in Figur 1 angedeutet, ist das erfindungsgemäße Beschattungssystem 1 in ein Staufach 15 führbar, so dass es in Ruheposition für den Benutzer nicht sichtbar ist. Vorzugsweise ist das Staufach 15 durch eine nicht dargestellte Klappe verschließbar. Die Fahrerkabine 2 des Wohnmobils weist im dargestellten Ausführungsbeispiel eine Frontscheibe 3 sowie zu jeder Seite zwei Seitenscheiben 4,5 auf. Damit das Beschattungssystem 1 die Fahrerkabine 2 zuverlässig beschatten kann, weist das Beschattungssystem 1 Abdeckmittel 6' auf, die in Beschattungsposition vollständig die genannten Scheiben 3,4,5 von Innen der Fahrerkabine 2 abdecken. Figur 1 zeigt das Abdeckmittel 6' in einer Zwischenposition, das bedeutet zwischen der Beschattungsposition, bei der das Abdeckmittel 6' vollständig heruntergefahren ist, und der Ruheposition, in der das Abdeckmittel 6' nicht sichtbar hinter der Fahrzeugverkleidung in dem genannten Staufach 15 sich befindet. Der dargestellte Doppelfeil deutet die Bewegungsrichtungen (nach oben und nach unten) des Abdeckmittels 6' an.

Im dargestellten Ausführungsbeispiel weist das Abdeckmittel 6' mehrere Abdeckflächen 6a,6b auf, die die Frontscheibe 3 sowie die Seitenscheiben 4,5 abdecken können. Jede Abdeckfläche 6a,6b ist als Rollo ausgebildet, das an einer Welleneinheit befestigt ist. Die Welleneinheit ist im Wesentlichen U-förmig ausgebildet und befindet sich ebenfalls hinter der Fahrzeugverkleidung oberhalb der Scheiben 3,4,5.

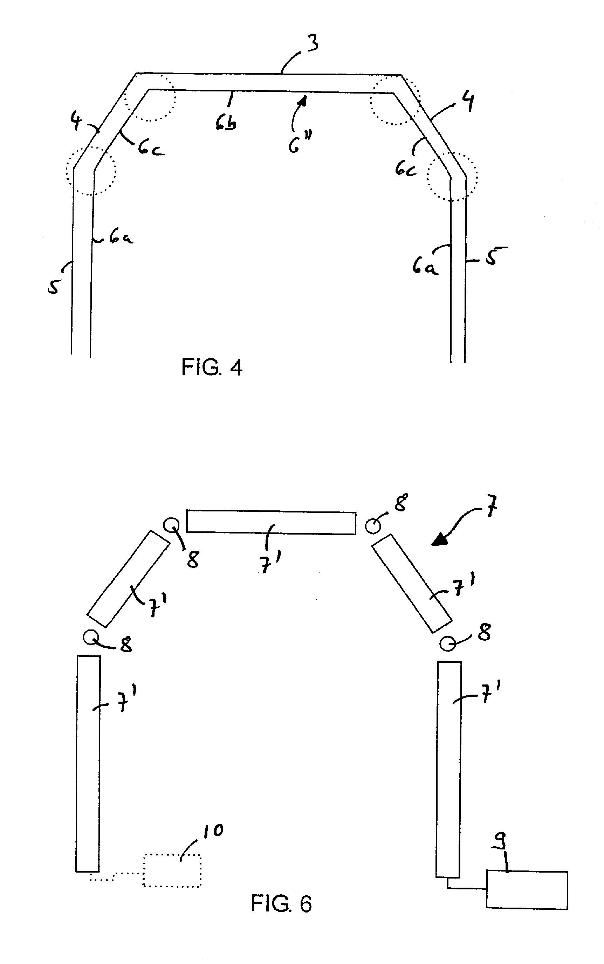

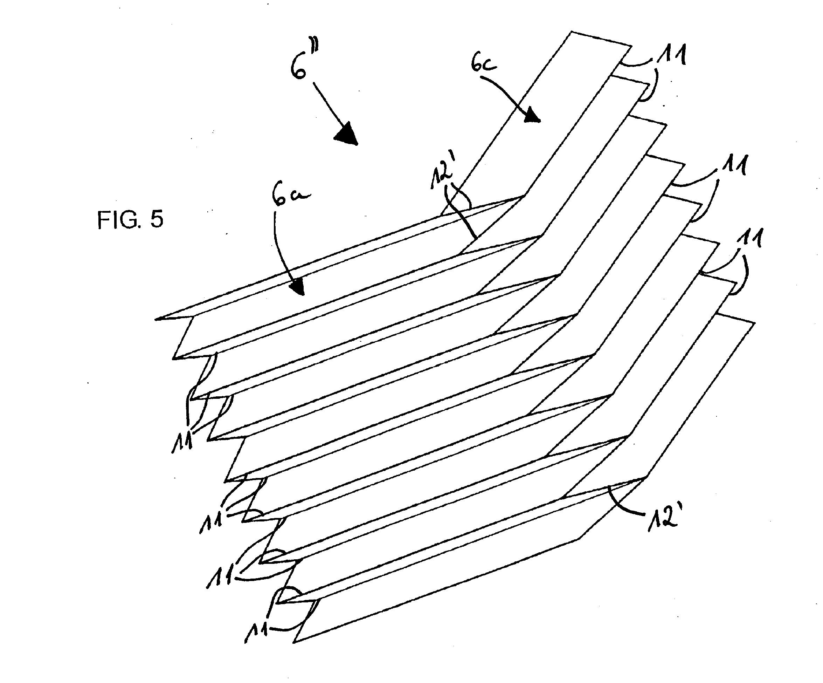

Rein schematisch ist eine mögliche Welleneinheit 7 in Figur 6 dargestellt, die aus mehreren Wellenabschnitten 7' und zwischen den Wellenabschnitten 7' angeordneten Verbindungselementen 8 besteht. Die Verbindungselemente 8 sind im dargestellten Ausführungsbeispiel als Kardangelenke ausgebildet. Die Welleneinheit 7 ist ferner mit einem Elektromotor 9 verbunden, der die Welleneinheit 7 mit den einzelnen Wellenabschnitten 7' mit einer entsprechenden Drehzahl antreibt. Selbstverständlich kann ein manueller Antrieb 10 der Welleneinheit 7 - beispielsweise durch einen Seilzug oder durch eine Handkurbel - vorgesehen sein. Die Kardangelenke 8 sorgen während des Betriebes des Elektromotors 9 dafür, dass das Drehmoment auf alle Wellenabschnitte 7' zuverlässig übertragen wird. Während der Aktivierung der Welleneinheit 7 erfolgt eine Aufwärts- und/oder Abwärtsbewegung des Abdeckmittels 6'. Besonders vorteilhaft ist, dass lediglich durch eine Welleneinheit 7 gleichzeitig alle Scheiben 3,4,5 bedeckt werden können. Die in Figur 1 darstellten Rollos 6' bestehen hierbei aus einem blickdichten Textilstoff. Während des Beschattungsvorgangs bewegen sich die Rollos 6' lotrecht nach unten, wobei in vollständiger Beschattungsposition die Abdeckfläche 6a unter anderem an der Armlehne der Fahrzeugtür anliegt und die Abdeckfläche 6b auf der Armatur der Fahrerkabine 2, wodurch eine vollständige Verdunkelung erzielbar ist.

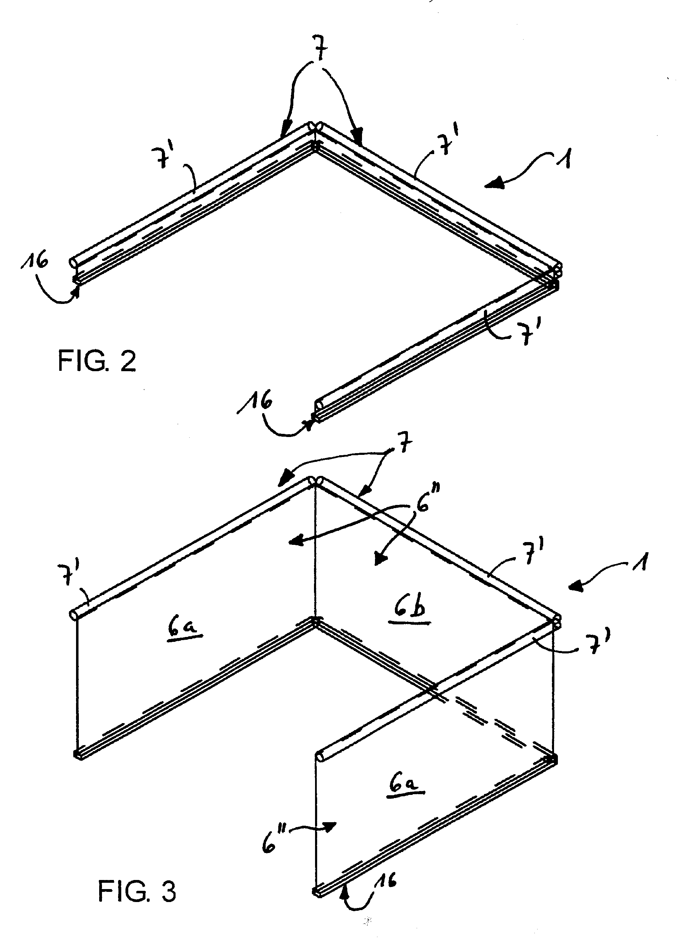

Figur 2 und Figur 3 zeigen weitere Ausführungsalternativen der Welleneinheit 7 auf. Hier besteht die Welleneinheit 7 aus drei Wellenabschnitten 7', die ebenfalls durch nicht dargestellte Gelenke miteinander verbunden sind. In diesem Ausführungsbeispiel ist das Abdeckmittel 6" als lammellenartiger Vorhang ausgeführt, der aus einem Papierstoff besteht. An der der Welleneinheit 7 abgewandten Seite des Abdeckmittels 6" ist ein Gewicht 16 in Form einer Aluminiumschiene angeordnet. Die Abdeckfläche 6a weist im Wesentlichen einen Winkel von 90° zur Abdeckfläche 6b auf. Die Besonderheit des lammellenartigen Vorhanges 6" ist, dass dieser einstückig ausgebildet ist.

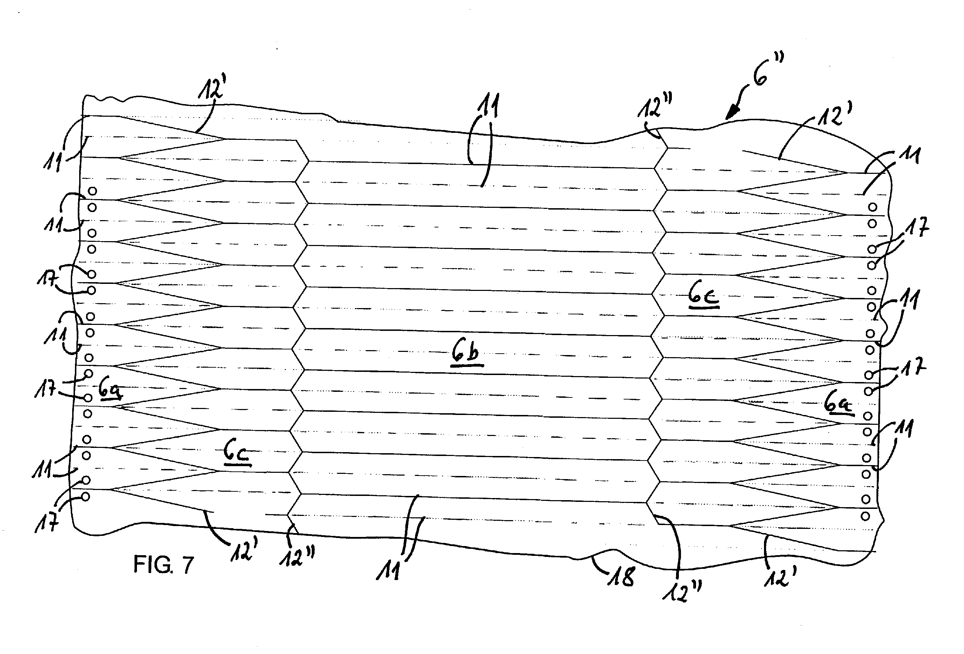

Figur 4 stellt eine weitere Alternative der Erfindung dar, bei der der lammellenartige Vorhang 6" fünf Abdeckflächen 6a,6b,6c aufweist, die in einem bestimmten Winkel zueinander ausgerichtet sind. Der lammellenartige Vorhang 6" aus dem Ausführungsbeispiel in Figur 2, Figur 3 sowie Figur 4 weist mehrere horizontale Falzlinien 11 und mehrere im zick-zack verlaufende Falzlinien 12',12" auf, die vertikal zu den horizontalen Falzlinien 11 sich erstrecken, welches in Figur 5 bzw. in Figur 7 dargestellt ist. Die horizontalen Falzlinien 11 liegen übereinander und verlaufen parallel zueinander. Alle horizontalen Falzlinien 11 weisen den gleichen Abstand zu der benachbarten oberen bzw. unteren Falzlinie 11 auf. Damit der Vorhang 6" eine U-förmige Erstreckung aufweisen kann, ist dieser in den Knickbereichen der Fahrerkabinenkontur mit der zick-zack verlaufenden Falzlinie 12',12" versehen. Die zick-zack verlaufende Falzlinie 12',12" bewirkt im zusammengefalteten Zustand des Vorhanges 6" eine Abwinklung der benachbarten Abdeckflächen 6a,6b,6c. Das bedeutet, dass an den Bereichen eine zick-zack verlaufende Falzlinie 12',12" bestehen soll, wo auch in der Fahrerkabine 2 eine Abwinklung zwischen den Scheiben 3,4,5 besteht. Durch die entsprechende horizontale und zick-zack Faltung 11,12',12" entsteht ein ziehharmonikaartiger Vorhang 6", wie es in Figur 5 verdeutlicht ist. Die Falzlinie 12' stellt hierbei den Kantenbereich zwischen der Abdeckfläche 6a und 6c dar. Die im Tal liegenden Falzlinien 11 der Abdeckfläche 6a sind jeweils durch Falzlinien 11, die auf dem Berg liegen, getrennt. Die im Tal liegende Falzlinie 11 der Abdeckfläche 6a ist im Bereich der Abdeckfläche 6c auf dem Berg liegend. Die auf dem Berg liegende Falzlinie 11 der Abdeckfläche 6a ist entsprechend im Bereich der Abdeckfläche 6c im Tal liegend. Durch die entsprechende Faltung an den Falzlinien 11,12',12" entsteht der ziehharmonikaartige Vorhang 6" der Platz sparend und blickdicht ist, ein geringes Gewicht aufweist und gut der Kontur der Fahrerkabine 2 anpassbar ist.

Figur 7 zeigt einen Ausschnitt des Zuschnitts 18 des lammellenartigen Vorhanges 6" für eine Fahrerkabine 2 mit vier Abknickbereichen. Neben den horizontalen Falzlinien 11 weist der Zuschnitt 18 des Vorhanges 6" vier im zick-zack verlaufende Falzlinien 12',12" auf, wobei die inneren zick-zack verlaufenden Falzlinien 12" eine kleinere Amplitude aufweisen als die äußeren im zick-zack verlaufenden Falzlinien 12'. Die geringere Amplitude der Falzlinie 12" bewirkt, dass die Abdeckflächen 6c und 6b in einem größeren Winkel zueinander stehen. Das bedeutet, dass die Abdeckflächen 6c und 6b in einem größeren Winkel zueinander abgeknickt (abgewinkelt) sind. Eine größere Amplitude bei der Falzlinie 12' bewirkt hingegen eine geringere Abknickung des Vorhanges 6".

Der Vorhang 6" in Figur 7 kann im Wesentlichen dem Fahrerkabinenverlauf bzw. dessen Frontscheibe bzw. Seitenscheiben 3,4,5 aus Figur 4 folgen. Der Vorhang 6" weist des Weiteren zwischen zwei horizontal verlaufenden Falzlinien 11 jeweils eine Öffnung 17 auf, durch die im zusammengefalteten Zustand beispielsweise ein Faden verläuft, der an einer Seite mit der Welleneinheit 7 verbunden ist. An der der Welleneinheit 7 gegenüberliegenden Seite kann der Faden beispielsweise mit einer Aluminiumschiene (siehe Figur 2 und Figur 3) befestigt sein. Während des Beschattungsvorganges wickelt sich der Faden von der sich rotierenden Welle ab und bewirkt aufgrund des Gewichtes der Aluminiumschiene 16 einen Entfaltungsvorgang des lammellenartigen Vorhanges 6", der lotrecht nach unten gezogen wird.

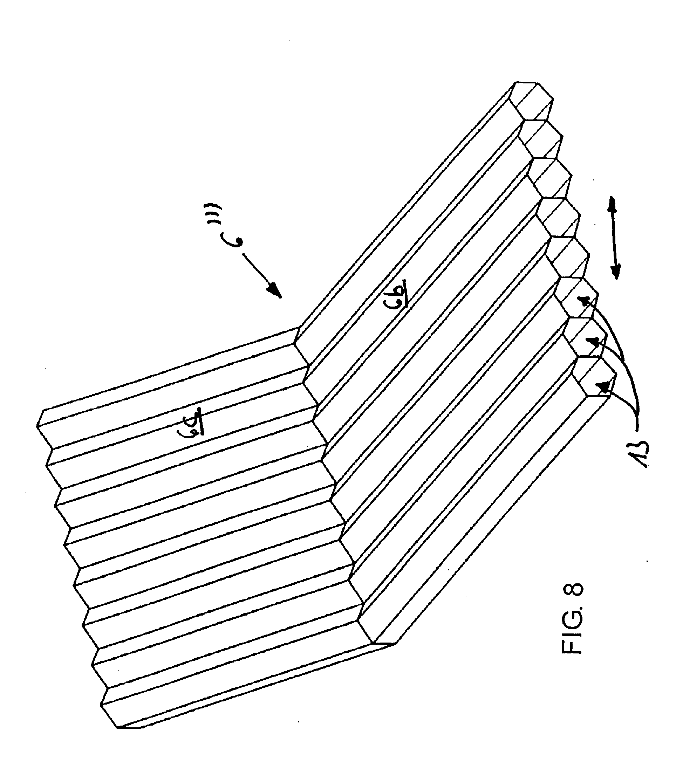

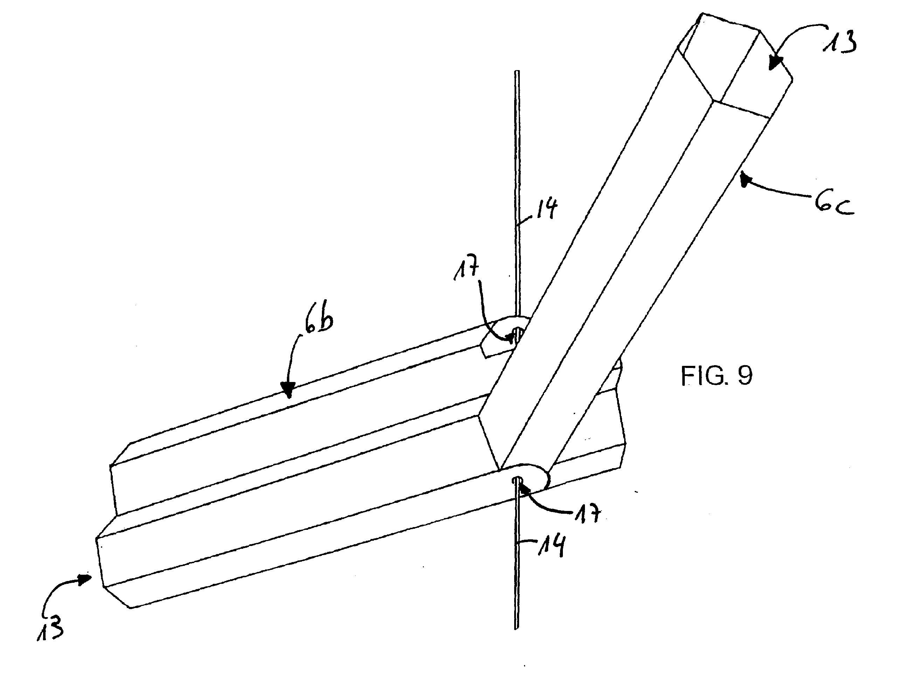

In Figur 8 ist eine weitere Alternative des Beschattungssystems 1 dargestellt. Hier weist das Abdeckmittel 6'" eine Vielzahl an übereinanderliegenden, zusammenfaltbaren Hohlkammerprofilen 13 auf. Die Hohlkammerprofile 13 sind miteinander verklebt und weisen eine wabenförmige Form auf. Das einzelne Hohlkammerprofil 13 weist sechs Seitenwände auf, die im vorliegenden Beispiel in Innern mit einer Aluminiumschicht überzogen sind. Im Ruhezustand bzw. im zusammengefalteten Zustand des Abdeckmittels 6"' ist das Hohlkammerprofil 13 im Wesentlichen zweidimensional. Im völlig ausgezogenen Zustand (Beschattungsposition) ist das Hohlkammerprofil 13 mit seinen Seitenwänden nahezu rechteckig. Der dargestellte Doppelfeil verdeutlicht die Zusammenfaltenrichtung beziehungsweise die Auseinanderziehrichtung. Bei diesem Ausführungsbeispiel sind die Abdeckflächen 6a,6b,6c des Abdeckmittels 6"' im Gegensatz zum lamellenartigen Vorhang 6" nicht einstückig miteinander verbunden. Jedes Hohlkammerprofil 13 der jeweiligen Abdeckfläche 6a,6b,6c ist in ein Hohlkammerprofil 13 der benachbarten Abdeckfläche hineingesteckt, welches rein schematisch in Figur 9 angedeutet ist. Das Hohlkammerprofil 13 der Abdeckfläche 6c erstreckt sich in das benachbarte Hohlkammerprofil 13 der Abdeckfläche 6b hinein, wobei gleichzeitig die Hohlkammerprofile 13 jeweils mit zwei gegenüberliegenden Öffnungen 17 versehen sind, durch die ein Faden 14 verläuft. Der Faden 14 durchläuft im Wechsel durch die Öffnungen 17 des Hohlkammerprofils 13 der Abdeckfläche 6c sowie durch die Öffnungen 17 des Hohlkammerprofils 13 der Abdeckfläche 6b. Die Hohlkammerprofile 13 sind derart ineinander gesteckt, dass ein zuverlässiger Halt im Verbindungsbereich gewährleistet ist. Zusätzlich werden die Hohlkammerprofile 13 beider Abdeckflächen 6c und 6b durch den vertikal verlaufenden Faden 14 zusammengehalten, der gleichzeitig als Führungsmittel während der Auf- und Abwartsbewegung dient. Auch in diesem Ausführungsbeispiel ist der Faden 14 an einer Seite mit der Welleneinheit 7 verbunden. An der gegenüberliegenden Seite ist der Faden 14 an einer nicht dargestellten Schiene befestigt, die am untersten Hohlkammerprofil 13 anliegt. Wird das aus Hohlkammerprofilen 13 bestehende Abdeckmittel 6'" von der Ruheposition in die Beschattungsposition gebracht, wickelt sich der Faden 14 von der Welleneinheit 7 ab, wobei gleichzeitig alle Hohlkammerprofile 13 sich entfalten.

Alle drei beschriebenen Ausführungsalternativen können selbstverständlich mit einer Arretierungsvorrichtung ausgestattet sein, um das Beschattungssystem 1 beispielsweise in der Beschattungsposition, in der Ruheposition oder in einer Position zwischen Beschattungs- und Ruheposition zuverlässig zu halten. Als Arretierungsvorrichtung ist beispielsweise eine Rutschkupplung denkbar.

### Bezugszeichenliste

- **1**: Beschattungssystem
- **2**: Fahrerkabine
- **3**: Frontscheibe
- **4**: Seitenscheibe
- **5**: Seitenscheibe
- **6',6",6"'**: Abdeckmittel
- **6a**: Abdeckfläche
- **6b**: Abdeckfläche
- **6c**: Abdeckfläche
- **7**: Welleneineinheit
- **7'**: Wellenabschnitt
- **8**: Verbindungselement
- **9**: Elektromotor
- **10**: manuell betätigbares Antriebselement
- **11**: horizontale Falzlinie
- **12',12"**: im zick-zack verlaufende Falzlinie
- **13**: Hohlkammerprofil
- **14**: Faden
- **15**: Staufach
- **16**: Gewicht, Aluminiumschiene
- **17**: Öffnung
- **18**: Zuschnitt

## Patentansprüche

1. Beschattungssystem (1) für eine Fahrerkabine (2) eines Kraftfahrzeugs, insbesondere eines Wohnmobils oder dergleichen, die mindestens eine Frontscheibe (3) und mehrere Seitenscheiben (4,5) aufweist, mit einem Abdeckmittel (6',6"',6"'), das durch eine Abwärtsbewegung in eine Beschattungsposition, in der das Abdeckmittel (6',6",6"') die Frontscheibe (3) und die Seitenscheiben (4,5) abdeckt, und durch eine Aufwärtsbewegung in eine Ruheposition bringbar ist,
**dadurch gekennzeichnet,**
**dass** das Abdeckmittel (6',6",6"') mit einer antreibbaren, im Wesentlichen einen U-förmigen Verlauf aufweisenden und derart ausgebildeten Welleneinheit (7) verbunden ist, dass bei Betätigung der Welleneinheit (7) die Aufwärts- und/oder Abwärtsbewegung des Abdeckmittels (6',6",6"') gleichzeitig an allen Scheiben (3,4,5) bewirkbar ist.

2. Beschattungssystem (1) nach Anspruch 1,
**dadurch gekennzeichnet,**
**dass** die Welleneinheit (7) mehrere Wellenabschnitte (7') aufweist, die durch Verbindungselemente (8) miteinander verbunden sind.

3. Beschattungssystem (1) nach Anspruch 2,
**dadurch gekennzeichnet,**
**dass** das Verbindungselement (8) ein Gelenk, insbesondere ein Kardangelenk, und/oder ein Kegelrad und/oder eine Schlauchkupplung ist.

4. Beschattungssystem (1) nach Anspruch 2 oder 3,
**dadurch gekennzeichnet,**
**dass** die Wellenabschnitte (7') aus einem flexiblen Material bestehen.

5. Beschattungssystem (1) nach einem der vorhergehenden Ansprüche,
**dadurch gekennzeichnet,**
**dass** die Welleneinheit (7) mit einem Elektromotor (9) und/oder mit einem manuell betätigbaren Antriebselement (10) verbunden ist.

6. Beschattungssystem (1) nach einem der vorhergehenden Ansprüche,
**dadurch gekennzeichnet,**
**dass** eine Arretiervorrichtung das Abdeckmittel (6',6",6"') in der jeweiligen Position hält.

7. Beschattungssystem (1) nach einem der vorhergehenden Ansprüche,
**dadurch gekennzeichnet,**
**dass** das Abdeckmittel (6',6",6"') zumindest an einer Seite mit einem metallischen Material, insbesondere Aluminium beschichtet ist.

8. Beschattungssystem (1) nach einem der vorhergehenden Ansprüche,
**dadurch gekennzeichnet,**
**dass** das Abdeckmittel (6',6",6"') Gewichte aufweist.

9. Beschattungssystem (1) nach einem der vorhergehenden Ansprüche,
**dadurch gekennzeichnet,**
**dass** die Gewichte an der der Welleneinheit (7) abgewandten Seite des Abdeckmittels (6',6",6"') angeordnet sind.

10. Beschattungssystem (1) nach einem der vorhergehenden Ansprüche,
**dadurch gekennzeichnet,**
**dass** das Abdeckmittel (6',6",6"') mehrere Abdeckflächen (6a,6b,6c) aufweist, die der jeweiligen zu beschattenden Scheibe (3,4,5) zugeordnet sind, wobei die benachbarten Abdeckflächen (6a,6b,6c) in einem Winkel zueinander stehen.

11. Beschattungssystem (1) nach einem der vorhergehenden Ansprüche,
**dadurch gekennzeichnet,**
**dass** die Abdeckflächen (6a,6b,6c) formschlüssig und/oder kraftschlüssig und/oder stoffschlüssig miteinander verbunden sind.

12. Beschattungssystem (1) nach Anspruch 11,
**dadurch gekennzeichnet,**
**dass** die Abdeckfläche (6a,6b,6c) ein Rollo (6') ist.

13. Beschattungssystem (1) nach einem der Ansprüche 1 bis 11,
**dadurch gekennzeichnet,**
**dass** das Abdeckmittel (6") zur Beschattung aller Scheiben (4,5,6) einstückig ausgebildet ist.

14. Beschattungssystem (1) nach einem der vorhergehenden Ansprüche,
**dadurch gekennzeichnet,**
**dass** das Abdeckmittel (6',6",6"') aus einem Kunststoff, Textil oder aus Papier besteht.

15. Beschattungssystem (1) nach Anspruch 13 oder 14,
**dadurch gekennzeichnet,**
**dass** das Abdeckmittel (6",6"') als lammellenartiger Vorhang ausgeführt ist.

16. Beschattungssystem (1) nach Anspruch 15,
**dadurch gekennzeichnet,**
**dass** der Vorhang (6") mehrere horizontale Falzlinien (11) und mehrere im zick-zack verlaufende Falzlinien (12',12") aufweist, die vertikal zu den horizontalen Falzlinien (11) sich erstrecken.

17. Beschattungssystem (1) nach einem der vorhergehenden Ansprüche,
**dadurch gekennzeichnet,**
**dass** die im zick-zack verlaufende Falzlinien (12',12") die Abdeckflächen (6a,6b,6c) voneinander begrenzen.

18. Beschattungssystem (1) nach einem der vorhergehenden Ansprüche,
**dadurch gekennzeichnet,**
**dass** die im zick-zack verlaufenden Falzlinien (12',12") im Bereich zwischen der Frontscheibe (3) und der Seitenscheibe (4) beziehungsweise im Bereich zwischen zwei Seitenscheiben (4,5) angeordnet sind.

19. Beschattungssystem (1) nach einem der vorhergehenden Ansprüche,
**dadurch gekennzeichnet,**
**dass** die zick-zack verlaufenden Falzlinien (12',12") unterschiedliche Amplituden aufweisen.

20. Beschattungssystem (1) nach einem der vorhergehenden Ansprüche,
**dadurch gekennzeichnet,**
**dass** das Abdeckmittel (6"') eine Vielzahl an übereinanderliegenden, zusammenfaltbaren Hohlkammerprofilen (13) aufweist.

21. Beschattungssystem (1) nach Anspruch 20,
**dadurch gekennzeichnet,**
**dass** die Hohlkammerprofile (13) miteinander verklebt sind.

22. Beschattungssystem (1) nach Anspruch 20 oder 21,
**dadurch gekennzeichnet,**
**dass** das Abdeckmittel (6"') mehrere Abdeckflächen (6a,6b,6c) aufweist, die über einen vertikal sich erstreckenden Faden (14) miteinander verbunden sind.

23. Beschattungssystem (1) nach Anspruch 20 bis 22,
**dadurch gekennzeichnet,**
**dass** das Hohlkammerprofil (13) eine wabenförmige Form aufweist.

24. Zuschnitt (18) zur Herstellung eines lammellenartigen Vorhanges (6") nach einem der vorhergehenden Ansprüche.

25. Kraftfahrzeug mit einem Beschattungssystem (1) nach einem der vorhergehenden Ansprüche.

26. Kraftfahrzeug nach Anspruch 25,
**dadurch gekennzeichnet,**
**dass** die Fahrerkabine (2) ein Staufach (15) aufweist, in dem das Beschattungssystem (1) in Ruheposition nicht sichtbar angeordnet ist, wobei das Staufach (15) durch eine verschließbare Klappe in Schließstellung sich befindet.
